# EUROPEAN PATENT SPECIFICATION

(11) **EP 0 650 078 B1**
(45) Date of publication and mention of the grant of the patent: **19.04.2000**
(21) Application number: 93117054.2
(22) Date of filing: 21.10.1993
(51) Int. Cl.: G02B 5/18

(54) **Reflective device and process for its manufacture**
Reflektierendes Gerät und Herstellungsverfahren
Dispositif réflechissant et méthode de fabrication

(43) Date of publication of application: 26.04.1995
(73) Proprietor: 3D Ltd., CH-6314 Unterägeri (CH)
(72) Inventor: Greenaway, David Leslie, CH-6317 Oberwil, Zug (CH)
(74) Representative: EGLI-EUROPEAN PATENT ATTORNEYS

(56) References cited:
- EP-A- 0 497 292
- DE-U- 9 104 172
- US-A- 3 516 730
- PATENT ABSTRACTS OF JAPAN vol. 12, no. 264 (P-734) (3111) 23 July 1988 & JP-A-63 049 702 (TOSHIBA CORP.) 2 March 1988

## Description

The invention concerns a reflective device according to the preamble of claim 1 as well as a process for the manufacture of such device and a marking or signalling device comprising a reflective device. Such devices must be clearly visible at night under a variety of illumination and observation conditions, and require an external and in general remotely located source of illumination.

A well-known device of the type in question is the "cats-eye" corner cube light retroflector system. A cats-eye element has the property of directing light incident from a remote source back in the direction of the source from which the light is emitted. This device therefore finds wide application as a road marking device (either at the centre of the road or at the edge) to provide night visibility when illuminated by the head lamps of vehicles. Retroreflecting properties can also be obtained by utilising the passage of light through glass spheres and a series of retroreflecting products have been realized by embedding arrays of small glass spheres in a suitable binder. These micro-sphere arrays are available as paints, lacquers and semi-rigid foils and allow the realization of road signs having enhanced visibility at nights. In these applications for retroreflecting devices, the light source and the observer must be located at effectively the same point in space, and remote from the retroreflecting device, although of course in a motor vehicle the observer (the driver) will actually be placed somewhat above and behind the lights of this vehicle (the light source).

These retroreflecting systems, while performing excellently under specific conditions, suffer from a number of drawbacks:
- if the light source and the observer are located at significantly different points in space (when the angle between source and observer is more than a few degrees of arc), then the retroreflecting element (part of for example a sign or marker) is no longer visible, or is only visible with a significantly reduced visibility.
- the presence of water either as droplets or as a continuous film can significantly deteriorate the performance of retroreflecting systems, particularly those made from arrays of microspheres in the form of paints and lacquers.
- cats-eyes in their traditional form of a retroreflective prism should ideally be mounted proud of the road surface in order to work as a road surface marking device. These elements cannot in general be used in environments where snowfall is likely because severe damage can occur during snow clearing operations. The alternative, which is to use a retroflective paint system, has the poor behaviour in wet conditions indicated above.
- Cats-eye systems in their various forms are not cheap to manufacture and the traditional road marker type requires an expensive installation procedure which involves cutting a recess in the road surface.

US-A-3 516 730 discloses ornamental diffraction gratings impressed in a reflectively coated transparent plastic sheet. A set of diffraction gratings is arranged in concentric circles or as a mosaic of segments of concentric circles. Due to its ornamental purpose the diffraction grating is not selected for good visibility under specified conditions for viewing.

EP-A-497 292 further discloses a display having a diffraction grating which includes a flat substrate and a multiplicity of dots formed on the surface of the flat substrate, the dots being formed by a diffraction grating pattern as an aggregate of a plurality of curves obtained by translating a curve. The purpose of the arrangement is to provide a display having diffraction grating patterns capable of expressing a stereoscopic (three-dimensional) image. The optical grating is not selected for preferred visibility under specified conditions for viewing, but for achieving omission-free stereoscopic effect while displaying images.

It is an object of the invention to offer an alternative to the retroflective system mentioned above, an alternative which avoids the drawbacks and can be produced by low cost manufacturing methods. What is described below is in fact a light reflecting system which can be engineered into a wide range of devices which possess pre-determined light reflecting properties. These devices make use of the diffraction properties of specially chosen regions of phase modulated fine line patterns of Fresnel zone plates, operating in the reflective mode.

Fine line patterns in the form of diffraction gratings have long been known in the field of optics and have the property that when used as reflection devices, incident light striking the device is directed not only into the mirror direction but also into one or more diffracted directions determined by the density and orientation of the lines. The Fresnel zone plate has also long been known in the field of optics, and consists of a concentric ring pattern of either amplitude or phase modulated rings whose separation decreases in a controlled way as the radius of the rings increases. Light incident on such a zone plate will also be diffracted into directions other than the mirror directions. The zone plate has the intrinsic property of focussing the diffracted light into one or more foci.

The invention will now be described by way of example and with reference to the accompanying drawings in which:
- Figure 1: is a schematic illustration of a typical situation involving a light source, a Fresnel zone plate and a region where reflected light is to be concentrated,
- Figure 2: a schematic top view of the Fresnel zone plate of Figure 1 with incoming, reflected and diffracted light,
- Figure 3: a front view of the Fresnel zone plate of Figure 2,
- Figure 4: a partial view of a reflective device according to the invention,
- Figure 5: shows a roadside post with a reflective device according to the invention,
- Figure 6: a sign post board portions of which are covered with reflecting devices according to the invention and
- Figure 7: street markings laid flat on the street surface comprising reflecting devices according to the invention.

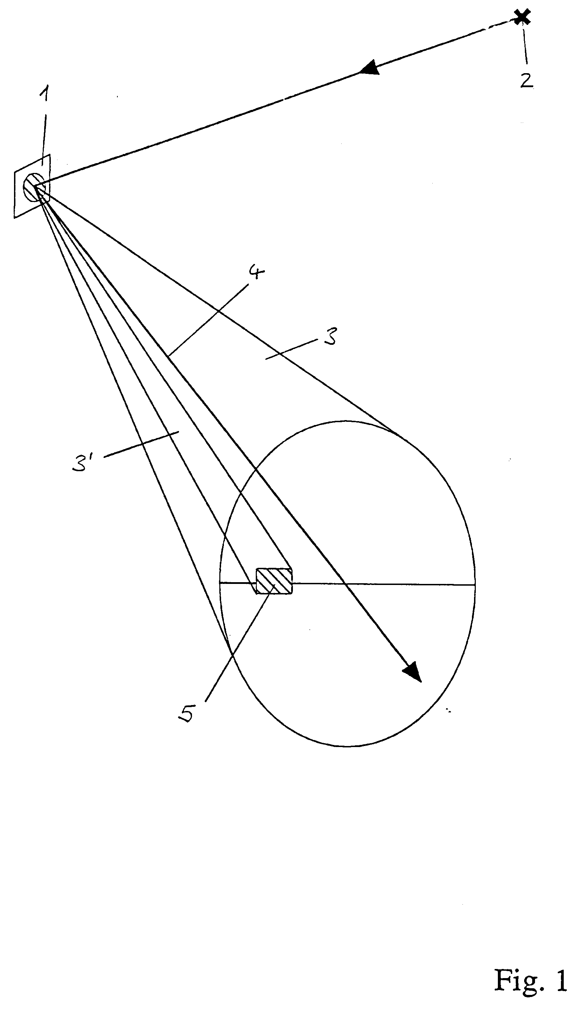

In the following the general principle of the invention is explained in connection with Figures 1 to 4.

A reflective Fresnel zone plate 1 with a plane reflective surface is being illuminated from a distant source 2 of visible light having a wavelength λ. The zone plate 1 has a diameter of 1 cm and contains approximately 4200 concentric Fresnel zones. The zones are preferentially zones of phase modulation of such a profile that a significant 1^{st} order diffraction efficiency is achieved upon illumination. The collective effect of the zone plate is to diffract part of the incident light into a 1^{st} order diffracted cone 3 having a solid angle of approximately 50° with the centre axis 4 of the cone 3 corresponding to the mirror reflection from the zone plate surface. In fact, cone 3 is a superposition of a first cone with its apex in front of the Fresnel zone plate 1 at a distance f (focal length) and a second cone with its apex behind the zone plate. These two cones correspond in optical terminology to the light which appears to originate from, i.e. passes through, the first order real and virtual focal points of the zone plate. Close to the zone plate and relative to the actual dimensions of the zone plate, these two focal points are quite separate. For the example given here of a zone plate having a 1 cm diameter and possessing 4200 concentric zones, the focal length for light having a wavelength near to the centre of the visible spectrum is also around 1 cm. For the purposes of the invention described here, where both the preferred zone plate structures and the focal lengths thereof are very much smaller than the distances of the source and observation point from the zone plate, the diffracted cone 3 may be regarded as a single cone originating from the point in space where the zone plate structure is located. For the example given above, the 50° cone is produced when the wavelength of the light is approx. 520 nm which corresponds to the centre of the visible spectrum (green light) . Shorter wavelengths will produce cones having a solid angle less than 50° and larger wavelengths will produce cones having solid angles larger than 50°. The total effect of a white light source which contains wavelengths from around 400 nm to 650 nm is to produce a complex superimposed set of cones, all centered on the mirror direction axis. An observer located within the cones and looking towards the zone plate will receive some portion of the light emitted by the source, resulting from the first order diffraction effects of the zone plate.

If the observer is located on the mirror axis 4 then some light will be observed by simple geometric reflection rather than by diffraction, but this is a limiting case because for the devices described here, it is very unlikely that the observer will be located exactly on this axis. For all other positions within the cones the observer sees diffracted light from the zone plate which in general is the superposition of many spectral components. As the observer moves away from the mirror axis 4, the colour-mix observed will change. Eventually the observer will only perceive the larger wavelength (red) component of the diffracted light as the viewing position moves outside the cones produced by the blue, green and yellow spectral components of the source but still remains within the cone produced by the red component. As the observer moves outside the red cone, then the zone plate is no longer seen, i.e. no visible light from the source reaches the observer via the diffraction produced by the zone plate.

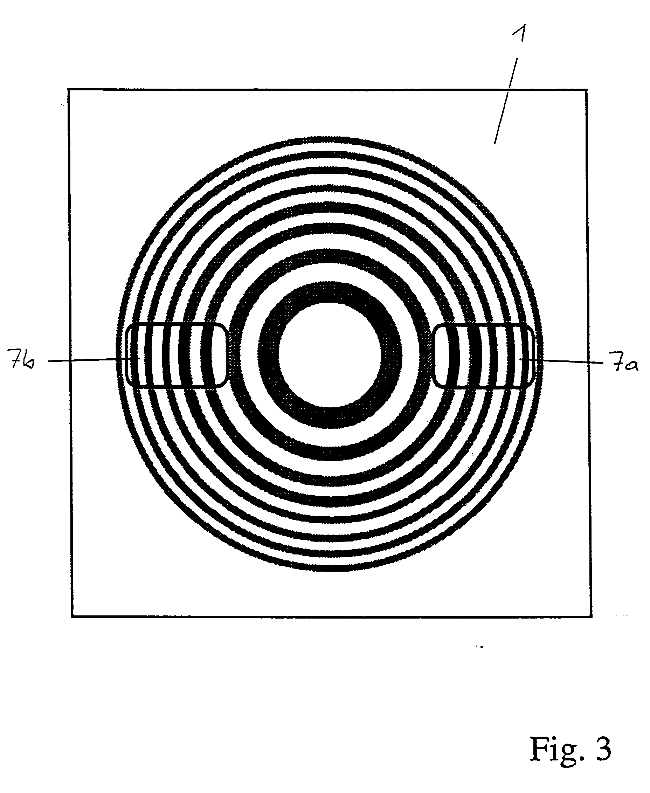

If we now make a more detailed analysis of the optical paths of the light which is emitted by the source, diffracted by the zone plate and then propagated within cone 3 towards the observer (this analysis is straightforward geometrical optics combined with diffraction theory) or generally towards a target region 5 where diffracted light is to be concentrated then it is found that for a given position for the light source 2, zone plate 1 and target region 5 (located within the cone for the wavelength being considered), the light directed towards the target region 5 is a partial cone 3' or rather a superposition of two partial cones 3'a,b with apices 6a,b which partial cones are diffracted from only two very small areas 7a,b of the zone plate. The diffraction properties of the zone plate also result in the areas 7a and 7b producing symmetrical first order diffracted cones 3''a and 3''b in a second target area 5a located on the opposite side of the mirror reflection direction 4 to the cones contributing to target area 5. The remainder of the zone plate 1 diffracts light from the source 2 into other regions of the cone 3. Figure 3 shows the surface of the zone plate 1 (assumed to be illuminated by the remote source 2 of Figure 1) with the areas 7a,b (shaded).

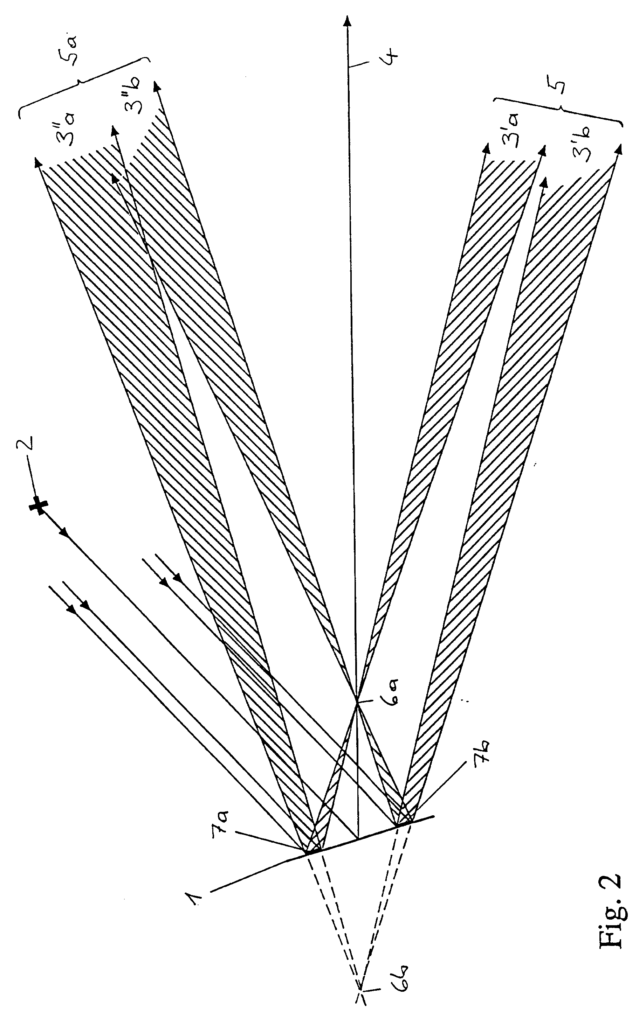

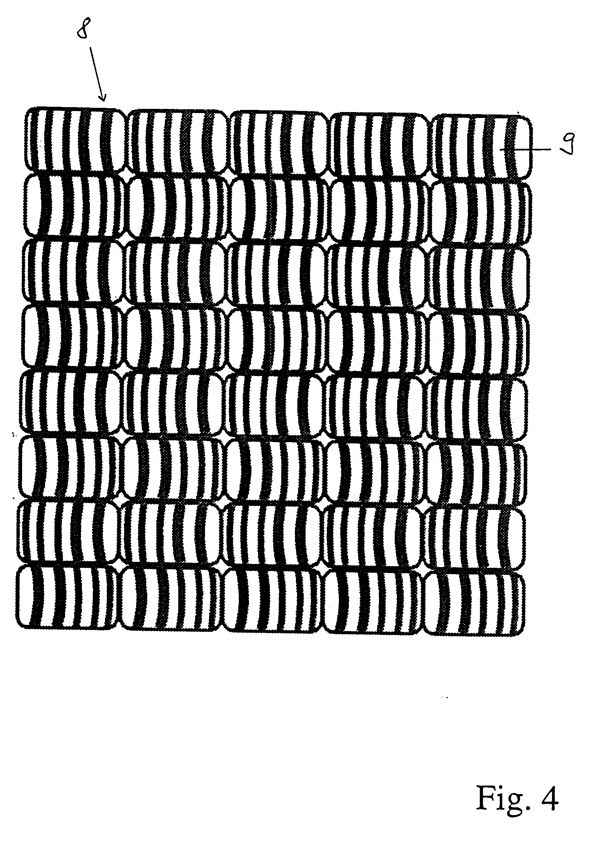

For a given wavelength of light from the source 2, the diffracted signal reaching the target region 5 (or 5a) or seen by an observer in that region (Figure 1) arises solely from the areas 7a,b on the zone plate 1. A consequence of this property is that if the viewing position is limited to points within the region 5 on Figure 1, then the diffracted signal will arise only from two defined areas of the zone plate 1 depicted by the shaded areas on Figure 3. Areas 7a and 7b possess the same mean spatial frequency of zone plate rings, and the rings have the same mean azimuth angle with respect to the plane defined by source 2, zone plate 1, and the target region 5. This property now allows a modified reflective zone plate to be designed, having only the diffraction properties of the areas 7a or 7b. In practice either 7a or 7b or both can be used because for the invention described here, the zone plate elements are very small compared to the distance from the zone plate to the observer who will be located in the so-called "far field" of the zone plate. In the far field, cones such as 3''a and 3''b appear to emanate from the same point in space (the zone plate) although in actual fact they emanate from points in front of and behind the zone plate. Figure 4 depicts such a modified zone plate 8 composed solely of diffractive elements having the properties of 7a or 7b. In the case depicted in Figure 4, each of such elemental areas 9 provides a contribution to the light seen by an observer in the target region 5, and in comparison with the single unmodified zone plate 1 of Figures 1 and 2, a large gain in total signal (in this case a factor of 40) is seen by the observer. The principles described above may be used for the design of a new class of reflective devices which can be used for marking and display applications involving a separate light source. The design chain consists of first determining three basic parameters for a desired application:
- the expected angular relationship or variations of angular relationships between the light source and the reflective marker or display
- the size and position of the marker or display including the angular tolerances which may be involved in erecting or mounting the marker or display
- the expected angular relationship or variation of angular relationship between the marker or display and the observer

These parameters now enable the definition of those sections or elemental areas of zone plates which allow light from the source to be diffracted towards the observer. The goal is to avoid including any zone plate regions which will diffract significant amounts of light from the source into directions where observation will never take place or is extremely unlikely. This procedure allows the perceived visibility or brightness of the marker or display to be maximised for the set of parameters chosen. The final optical form of the device will in general be an array of zone plate sections butted together to form a larger area to be used as the reflective marker or display.

The practical realization of these devices based on the optical principles described above can be achieved using the following steps:

An optical recording of the required zone plate section or sections is made by means of the interference of suitable coherent wavefronts on a photo-sensitive phase recording medium (photo-resist). For a zone plate structure, the preferred coherent wavefronts are two wavefronts of widely differing curvatures, for example a plane wave and a rapidly diverging spherical wave. The methodology required to obtain such interference and to capture the resulting standing wave pattern in a recording medium such as photoresist is known in the field of coherent optics and holography. After exposure and processing, the resultant phase-modulated relief pattern embodying the zone plate information is copied into a metallic surface by means of electroforming technology. This metallic surface carrying the zone plate section can now be repeatedly copied by means of galvanic technology, or it may be repeatedly replicated into a deformable medium by means of embossing or casting technology to yield a larger array carrying a multiplicity of the zone plate sections arranged in a suitable geometry. This array is then also converted into a larger metallic plate (shim), the surface relief structure of which can be replicated into transparent foils by thermal embossing or casting technology. The zone plate section arrays are after this step present as a surface relief structure on one face of the transparent foil. A reflective layer is applied to this face (commonly by vacuum metallization using aluminium) to yield the final reflective device. Additional processing steps may be subsequently involved, such as the application of additional layers by coating or printing technology, but these layers serve only to enable particular forms of the final device to be realized - they are not relevant to the basic principles described above.

The description above has involved the use of reflective zone plate elements in order to realize a new class of marker and display devices and this represents a preferred form. Because, however, the light sources used to illuminate the devices contain many wavelengths, the observer in general receives these many wavelengths via the diffraction caused by the zone plate elements, each wavelength arising from small but different areas within the element. If some of the regions of zone plate within an element are not present, then although the perceived colour may change, the zone plate will retain its marker or display function. This leads to an alternative embodiment of the device described here where the actual elements are not zone plates, but are themselves comprised of a multiplicity of discrete cells of linear grating structures. Here, within a zone plate element which would meet the device parameters required, the average spatial frequency and azimuth angle of the zone plate ring segments is computed, measured or estimated at a number of evenly spaced points throughout the element, and the element is replaced by a set of discrete linear grating sub-elements, each sub-element having an averaged but constant spatial frequency and the appropriate azimuth angle.

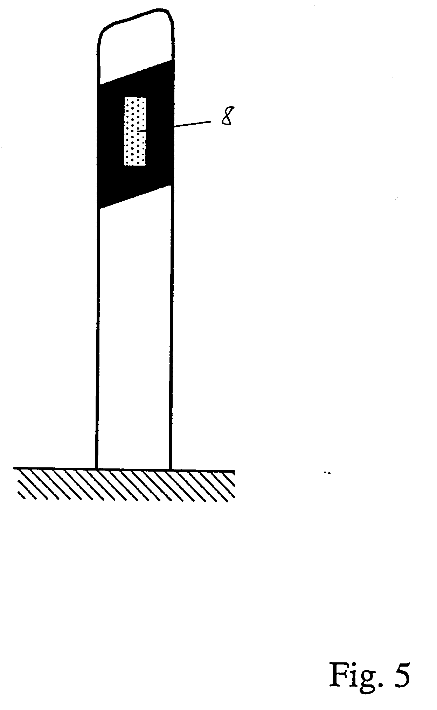

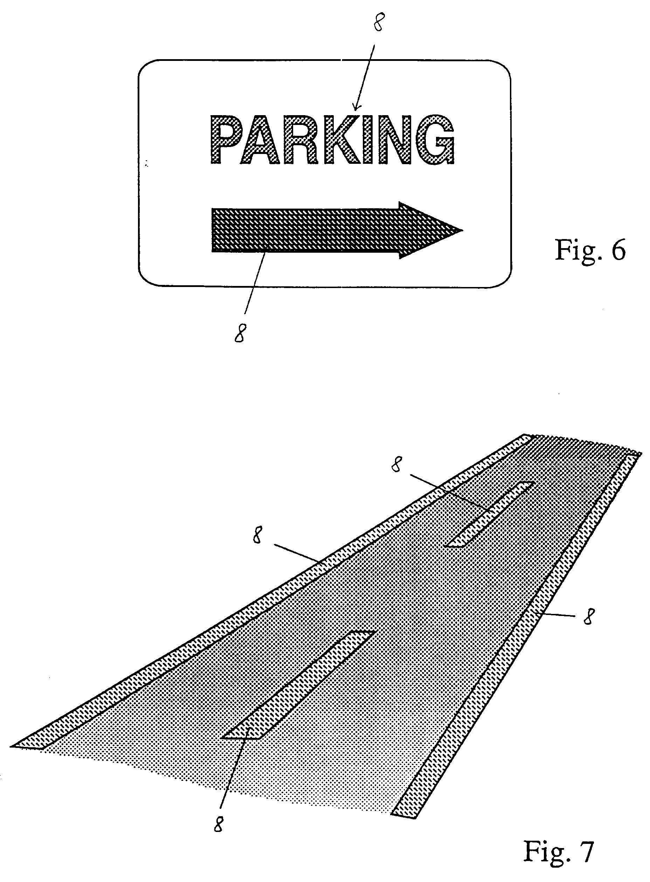

In Figure 1, a solid angle of 50° has been used to illustrate the principle of the devices described here, but the invention is in no way limited to this value. Zone plate sections can be recorded optically so that the first order diffraction component from the highest spatial frequency region can have an angle which is well in excess of 90° to the mirror reflection direction for wavelengths in the visible region of the spectrum. For such zone plate sections the observation or target area corresponds to the target area 5a shown on Figure 2 which will then be the only target area permitted by symmetry considerations because the target area 5 will lie below the zone plate surface. For zone plate sections where the first order diffraction component exceeds 90° with respect to the mirror reflection direction, only one first order diffraction component can exist and this component will appear only when the zone plate section is illuminated obliquely. A suitable choice of zone plate section recording parameters in fact allows the target area 5a to be located around or close to the direction from which the light originates even when the light strikes the zone plate section at oblique angles which approach the condition of grazing incidence. The range of diffracting properties which can be obtained from appropriately chosen zone plate sections therefore enables the realization of devices such as road and street numbers comprising reflective devices 8 in the form of reflective foils, where the foils can be laid flat on the road surface (Fig. 7), or applied to the vertical surface of a safety barrier or post (Fig. 5) or sign board (Fig. 6), billboard or such with letters, numerals or symbols cut or stamped from reflective foil or with a background of reflective foil with letters etc. cut from opaque or coloured transparent material partially masquing it, a hazard zone such as the wall of a tunnel, and be clearly visible at night to a driver whose vehicle provides the source of light. Another possible use of reflective devices, particularly reflective foils, for marking or signalling purposes consists in affixing them to an exterior surface of a vehicle or other surface of the vehicle visible from the exterior or to the external surface of clothing. Furthermore, reflective foils can be applied to an object either in part or over the whole surface to provide visibility enhancement and/or a decorative function over a wide range of source object and observer positions.

It should also be evident from the teaching given above that zone plate section reflective foils for marking and signboard applications can also be designed and realized which are visible to a moving or stationary observer under conditions where the illumination source emanates from a position which is completely different to the position of the observer. The surface of a sign may be made with an appropriate foil so that an independent static light source (spotlight or floodlight) provides the illumination and the foil properties provide enhanced visibility to observers on a nearby road or path. For highway applications, overhead street lighting can provide the illumination source for an appropriate foil laid flat on the pavement surface or mounted vertically on a crash barrier so that the foil location becomes readily visible to observers in passing traffic.

There are many more possible ways of using the invention. The reflective devices may be covered or tiled in a regular fashion with areas pertaining to different types with different patterns and consequent angular distributions of diffracted light. The devices can be made of any suitable material or materials provided that the surface is light-reflecting and in any convenient shape as long as the optically active region is essentially plane. Aside from marking and signalling purposes they can be used for the distribution of light from one source or several sources into a number of directions or onto a number of objects to be illuminated and the creation of special decorative effects.

## Claims

1. A reflective device (8) comprising a multiplicity of areas (9) arranged on a support, each area having an essentially plane reflective surface comprising a set of grooves which form a reflective diffraction pattern, the pattern formed by the grooves at least approximating a segment of concentric circles, the multiplicity of areas (9) pertaining to a limited number of diffraction patterns, **characterized in that** the set of grooves of each area follows or approximates a specific section from a Fresnel zone plate pattern.

2. A reflective device according to claim 1, **characterized in that** any area (9) is subdivided into a multiplicity of patches where the grooves are straight and equally spaced so that on the scale of the area (8) they approximate a diffractive pattern.

3. A reflective device according to claim 1 or 2 **characterized in that** the areas (9) at least essentially form a tiling covering the whole of the surface section.

4. A reflective device according to one of claims 1 to 3 **characterized in that** the optically active region is formed by a thin metallic or dielectric layer on a polymeric carrier.

5. A reflective device according to claim 4 **characterized in that** the support is a foil.

6. A method for the manufacture of a reflective device (8) according to claim 1 with an optically active region comprising a multiplicity of areas (9) having an essentially plane reflective surface comprising a set of grooves which form a reflective diffraction pattern, comprising steps for:
- determining a position and orientation in which the reflective device (8) is to be used,
- determining probable positions of a source (2) of visible light,
- determining the position of a target region (5) onto which light is to be directed by the reflective device (8),
- deriving a reflective diffraction pattern of an area or areas experimentally or mathematically from the above-enumerated parameters, and
- based on this derivation, forming a reflective device (8) wherein the reflective diffraction pattern of each area (9) is having a set of grooves which diffract at least a part of the incident light from the source (2) into the target region (5) and essentially avoid diffraction into regions different from the target region, the pattern formed by the grooves at least approximating a segment of concentric circles, the multiplicity of areas (9) pertaining to a limited number of diffraction patterns, wherein the set grooves of each area follows or approximates a specific section from a Fresnel zone plate pattern.

7. The method according to claim 6, **characterized in that** the diffraction pattern is produced by recording the interference between two beams of coherent radiation in an appropriate photosensitive material, subsequently metallic printing or casting plates (shims) with at least one set of elevations conforming to the at least one diffractive pattern are produced using electroforming and galvanic deposition technology, at least one set of grooves conforming to the set of elevations recorded on the shims is produced on the surface of a polymer carrier by embossing or casting, and at least one additional layer for at least one of reflectivity enhancement, surface protection, and adhesion to a surface in order to realize a finished reflective product is applied.

8. Marking or signalling device located at the road side comprising at least one optically active surface section formed by a reflective device according to one of claims 1 to 5.

9. Marking or signalling device according to claim 8, **characterized in that** the optically active surface section is essentially vertically oriented.

10. Marking or signalling device according to claim 8 or 9, **characterized in that** it is shaped as a post.

11. Marking or signalling device according to claim 8 or 9, **characterized in that** it is shaped as a sign post board or billboard.

12. Marking or signalling device according to claim 8 **characterized in that** the reflective device is a reflective foil laid flat on the road surface.

13. Marking or signalling device according to one of claims 8 to 12 **characterized in that** the optically active surface section is partially covered by opaque or coloured transparent paint or masqued.

14. Marking or signalling device according to one of claims 8 to 13 **characterized in that** optically active surface sections or eventually parts of an optically active surface section covered by paint or masqued out are shaped as letters, numerals or symbols.

15. Use of a reflective device according to one of claims 1 to 5 as a marking or signalling device affixed to part of the exterior surface of a vehicle or to a surface that is visible from the exterior of the vehicle.

16. Use of a reflective device according to one of claims 1 to 5 as a marking or signalling device affixed to the external surface of clothing.

17. Use of a device according to claim 4 to provide visibility enhancement and/or a decorative function over a wide range of source object and observer positions applied to an object either in part or over the whole surface.

## Patentansprüche

1. Reflektierendes Gerät (8), welches eine Vielzahl von auf einer Unterlage angeordneten Gebieten (9) umfaßt, wobei jedes Gebiet eine im wesentlichen ebene reflektierende Oberfläche aufweist, die eine Gruppe von Rillen umfaßt, welche eine reflektierende Beugungsfigur bilden, wobei sich die von den Rillen gebildete Figur einem Segment von konzentrischen Kreisen zumindest annähert, wobei die Vielzahl von Gebieten (9) zu einer begrenzten Anzahl von Beugungsfiguren gehört, dadurch gekennzeichnet, daß die Gruppe von Rillen jedes Gebietes einem spezifischen Abschnitt aus einer Fresnelzonen-Plattenfigur folgt oder sich diesem annähert.

2. Reflektierendes Gerät nach Anspruch 1, dadurch gekennzeichnet, daß jedes Gebiet (9) in eine Vielzahl von Stücke unterteilt ist, in denen die Rillen gerade sind und den gleichen Abstand voneinander haben, so daß sie sich im Rahmen des Gebietes (9) einer Beugungsfigur annähern.

3. Reflektierendes Gerät nach Anspruch 1 oder 2, dadurch gekennzeichnet, daß die Gebiete (9) zumindest im wesentlichen einen Plattenbelag bilden, der die Gesamtheit des Oberflächenabschnittes bedeckt.

4. Reflektierendes Gerät nach einem der Ansprüche 1 bis 3, dadurch gekennzeichnet, daß der optisch aktive Bereich von einer dünnen metallischen oder dielektrischen Schicht auf einem polymeren Träger gebildet wird.

5. Reflektierendes Gerät nach Anspruch 4, dadurch gekennzeichnet, daß die Unterlage eine Folie ist.

6. Verfahren zur Herstellung eines reflektierenden Gerätes (8) nach Anspruch 1 mit einem optisch aktiven Bereich, welcher eine Vielzahl von Gebieten (9) umfaßt, die eine im wesentlichen ebene reflektierende Oberfläche aufweisen, die eine Gruppe von Rillen umfaßt, welche eine reflektierende Beugungsfigur bilden, das Schritte umfaßt zum:
- Bestimmen einer Position und Ausrichtung, in der das reflektierende Gerät (8) verwendet werden soll,
- Bestimmen von wahrscheinlichen Positionen einer Quelle (2) von sichtbarem Licht,
- Bestimmen der Position eines Zielbereiches (5), auf den das Licht durch das reflektierende Gerät (8) gerichtet werden soll,
- Ableiten einer reflektierenden Beugungsfigur eines Gebiets oder von Gebieten auf experimentellem oder mathematischem Weg aus den oben aufgeführten Parametern, und
- basierend auf dieser Ableitung, Bilden eines reflektierenden Geräts (8), bei dem die reflektierende Beugungsfigur jedes Gebiets (9) eine Gruppe von Rillen aufweist, welche zumindest einen Teil des einfallenden Lichtes von der Quelle (2) in den Zielbereich (5) beugen und im wesentlichen eine Beugung in vom Zielbereich verschiedene Bereiche vermeiden, wobei sich die von den Rillen gebildete Figur einem Segment von konzentrischen Kreisen zumindest annähert, wobei die Vielzahl von Gebieten (9) zu einer begrenzten Anzahl von Beugungsfiguren gehört, wobei die Gruppe von Rillen jedes Gebietes einem spezifischen Abschnitt aus einer Fresnelzonen-Plattenfigur folgt oder sich diesem annähert.

7. Verfahren nach Anspruch 6, dadurch gekennzeichnet, daß die Beugungsfigur durch Aufzeichnen der Interferenz zwischen zwei Strahlen einer kohärenten Strahlung in einem geeigneten lichtempfindlichen Material erzeugt wird, anschließend metallische Druckplatten oder Gießplatten (Scheiben) mit wenigstens einer Gruppe von Erhebungen, die mit der wenigstens einen Beugungsfigur konform sind, unter Anwendung der Galvanoformtechnik und der galvanischen Oberflächenbehandlung hergestellt werden, wenigstens eine Gruppe von Rillen, die mit der Gruppe der auf den Scheiben aufgezeichneten Erhebungen konform ist, auf der Oberfläche eines polymeren Trägers durch Prägen oder Gießen hergestellt wird und wenigstens eine zusätzliche Schicht für wenigstens einen der Zwecke Erhöhung des Reflexionsvermögens, Oberflächenschutz und Haftung an einer Oberfläche zur Herstellung eines fertigen reflektierendes Produktes aufgetragen wird.

8. Markierungs- oder Signalvorrichtung, die am Straßenrand angebracht ist und wenigstens einen Abschnitt mit einer optisch aktiven Fläche umfaßt, der von einem reflektierenden Gerät nach einem der Ansprüche 1 bis 5 gebildet wird.

9. Markierungs- oder Signalvorrichtung nach Anspruch 8, dadurch gekennzeichnet, daß der Abschnitt mit der optisch aktiven Fläche im wesentlichen vertikal ausgerichtet ist.

10. Markierungs- oder Signalvorrichtung nach Anspruch 8 oder 9, dadurch gekennzeichnet, daß sie die Form eines Pfostens hat.

11. Markierungs- oder Signalvorrichtung nach Anspruch 8 oder 9, dadurch gekennzeichnet, daß sie die Form einer Wegweisertafel oder Reklametafel hat.

12. Markierungs- oder Signalvorrichtung nach Anspruch 8, dadurch gekennzeichnet, daß das reflektierende Gerät eine reflektierende Folie ist, die flach auf die Fahrbahnoberfläche gelegt ist.

13. Markierungs- oder Signalvorrichtung nach einem der Ansprüche 8 bis 12, dadurch gekennzeichnet, daß der Abschnitt mit der optisch aktiven Fläche teilweise mit einem undurchsichtigen oder farbigen durchsichtigen Anstrich überdeckt oder verdeckt ist.

14. Markierungs- oder Signalvorrichtung nach einem der Ansprüche 8 bis 13, dadurch gekennzeichnet, daß die Abschnitte mit einer optisch aktiven Fläche oder eventuell Teile eines Abschnitts mit einer optisch aktiven Fläche, die mit einem Anstrich überdeckt oder verdeckt sind, als Buchstaben, Ziffern oder Symbole geformt sind.

15. Verwendung eines reflektierenden Geräts nach einem der Ansprüche 1 bis 5 als Markierungs- oder Signalvorrichtung, die an einem Teil der Außenfläche eines Fahrzeugs oder an einer Fläche, die von außerhalb des Fahrzeugs sichtbar ist, befestigt ist.

16. Verwendung eines reflektierenden Geräts nach einem der Ansprüche 1 bis 5 als Markierungs- oder Signalvorrichtung, die an der Außenfläche von Kleidung befestigt ist.

17. Verwendung eines Geräts nach Anspruch 4, um eine Verbesserung der Sichtbarkeit und/oder eine dekorative Funktion in einem weiten Bereich von Positionen des Quellenobjekts und des Betrachters zu erzielen, durch Anbringung entweder auf einem Teil eines Objekts oder auf der gesamten Oberfläche.

## Revendications

1. Dispositif réfléchissant (8) comprenant une multitude de zones (9) arrangées sur un support, chaque zone possédant une surface réfléchissante essentiellement plane comprenant une série de rainures qui forment un modèle réfléchissant par diffraction, le modèle formé par les rainures s'approchant au moins de celui d'un segment formé par des cercles concentriques, la multitude de zones (9) concernant un nombre limité de modèles de diffraction, caractérisé en ce que la série de rainures de chaque zone suit ou s'approche d'une section spécifique d'un modèle d'enseigne à zones de Fresnel.

2. Dispositif réfléchissant selon la revendication 1, caractérisé en ce que n'importe quelle zone (9) est subdivisée en une multitude de pièces, les rainures étant rectilignes et équidistantes, si bien qu'à l'échelle de la zone (8), elles s'approchent d'un modèle de diffraction.

3. Dispositif réfléchissant selon la revendication 1 ou 2, caractérisé en ce que les zones (9) forment au moins, de manière essentielle, un dallage recouvrant la totalité de la section superficielle.

4. Dispositif réfléchissant selon les revendications 1 à 3, caractérisé en ce que la région optiquement active est formée par une mince couche métallique ou diélectrique sur un support polymère.

5. Dispositif réfléchissant selon la revendication 4, caractérisé en ce que le support est une feuille mince.

6. Procédé pour la fabrication d'un dispositif réfléchissant (8) selon la revendication 1, muni d'une région optiquement active comprenant une multitude de zones (9) possédant une surface réfléchissante essentiellement plane comprenant une série de rainures qui forment un modèle réfléchissant par diffraction, comprenant les étapes consistant à:
- déterminer une position et une orientation dans lesquelles le dispositif réfléchissant (8) doit être utilisé,
- déterminer des positions probables d'une source (2) de lumière visible,
- déterminer la position d'une région cible (5) sur laquelle la lumière doit être dirigée par le dispositif réfléchissant (8),
- dériver un modèle réfléchissant par diffraction d'une zone ou de plusieurs zones, par expérience ou par calcul mathématique, à partir des paramètres énumérés ci-dessus, et
- en se basant sur cette dérivation, former un dispositif réfléchissant (8) dans lequel le modèle réfléchissant par diffraction de chaque zone (9) possède une série de rainures qui diffractent au moins une partie de la lumière incidente provenant de la source (2) dans la région cible (5) et qui évite essentiellement la diffraction dans des régions différentes de la région cible, le modèle formé par les rainures étant un modèle qui au moins s'approche de celui d'un segment formé par des cercles concentriques, la multitude de zones (9) concernant un nombre limité de modèles de diffraction, dans lequel la série de rainures de chaque zone suit ou s'approche d'une section spécifique d'un modèle d'enseigne à zones de Fresnel.

7. Procédé selon la revendication 6, caractérisé en ce qu'on obtient le modèle de diffraction en enregistrant l'interférence entre deux faisceaux de rayonnement cohérents dans un matériau photosensible approprié; ensuite, en utilisant une technologie d'électroformage et de galvanoplastie, on munit des plaques métalliques d'impression et de moulage (rondelles d'épaisseurs) d'au moins une série de saillies épousant la forme d'au moins un modèle de diffraction; on munit la surface d'un support polymère par emboutissage ou par moulage d'au moins une série de rainures épousant la forme de la série de saillies enregistrées sur les rondelles d'épaisseurs; et on applique au moins une couche supplémentaire pour obtenir au moins une propriété choisie parmi celles comprenant l'amélioration du pouvoir réfléchissant, la protection de la surface et l'adhérence à une surface pour obtenir un produit réfléchissant prêt à l'emploi.

8. Dispositif de marquage ou de signalisation situé sur un côté d'une route comprenant au moins une section de surface optiquement active formée par un dispositif réfléchissant selon l'une quelconque des revendications 1 à 5.

9. Dispositif de marquage ou de signalisation selon la revendication 8, caractérisé en ce que la section de surface optiquement active est orientée essentiellement à la verticale.

10. Dispositif de marquage ou de signalisation selon la revendication 8 ou 9, caractérisé en ce qu'il est réalisé sous la forme d'un poteau.

11. Dispositif de marquage ou de signalisation selon la revendication 8 ou 9, caractérisé en ce qu'il est réalisé sous la forme d'un poteau de signalisation ou d'un panneau d'affichage.

12. Dispositif de marquage ou de signalisation selon la revendication 8, caractérisé en ce que le dispositif réfléchissant est une feuille réfléchissante posée à plat sur la surface de la route.

13. Dispositif de marquage ou de signalisation selon l'une quelconque des revendications 8 à 12, caractérisé en ce que la section de surface optiquement active est recouverte en partie par de la peinture opaque ou transparente colorée ou est masquée.

14. Dispositif de marquage ou de signalisation selon l'une quelconque des revendications 8 à 13, caractérisé en ce que des sections de surfaces optiquement actives ou le cas échéant des parties d'une section de surface optiquement active recouvertes par de la peinture ou masquée se présentent sous la forme de lettres, de chiffres, de symboles.

15. Utilisation d'un dispositif réfléchissant selon l'une quelconque des revendications 1 à 15 à titre de dispositif de marquage ou de signalisation fixé à une partie de la surface externe d'un véhicule ou à une surface qui est visible depuis l'extérieur du véhicule.

16. Utilisation d'un dispositif réfléchissant selon l'une quelconque des revendications 1 à 5 à titre de dispositif de marquage ou de signalisation fixé sur la surface externe d'un vêtement.

17. Utilisation d'un dispositif réfléchissant selon la revendication 4 pour procurer une amélioration de la visibilité et/ou une fonction décorative sur une large gamme d'objets-sources et de positions d'observateurs appliquées sur un objet, soit en partie, soit sur toute la surface.
